(19) Europäisches Patentamt / European Patent Office / Office européen des brevets

(11) EP 4 557 462 A1

(12) EUROPEAN PATENT APPLICATION
published in accordance with Art. 153(4) EPC

(43) Date of publication:
21.05.2025 Bulletin 2025/21

(21) Application number: 23839517.2

(22) Date of filing: 03.07.2023

(51) International Patent Classification (IPC):
H01M 10/6571 (2014.01)      H01M 10/44 (2006.01)
H01M 10/615 (2014.01)       H01M 10/647 (2014.01)
H01M 10/653 (2014.01)       H01M 10/658 (2014.01)
H02J 7/00 (2006.01)         H02J 50/12 (2016.01)

(52) Cooperative Patent Classification (CPC):
H01M 10/44; H01M 10/615; H01M 10/647;
H01M 10/653; H01M 10/6571; H01M 10/658;
H02J 7/00; H02J 50/12; Y02E 60/10

(86) International application number:
PCT/JP2023/024665

(87) International publication number:
WO 2024/014345 (18.01.2024 Gazette 2024/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.07.2022 JP 2022112653

(71) Applicant: Murata Manufacturing Co., Ltd.
Nagaokakyo-shi, Kyoto 617-8555 (JP)

(72) Inventor: KATO, Tomohiro
Nagaokakyo-shi, Kyoto 617-8555 (JP)

(74) Representative: Reddie & Grose LLP
The White Chapel Building
10 Whitechapel High Street
London E1 8QS (GB)

(54) **SOLID-STATE BATTERY MODULE**

(57) One embodiment of the present invention provides a solid-state battery module including a substrate, a solid-state battery disposed on the substrate, and a wireless power supply circuit including a capacitor, in which at least the capacitor and the solid-state battery are disposed on a same main surface side of the substrate.

FIG. 1

EP 4 557 462 A1

## Description

TECHNICAL FIELD

The present invention relates to a solid-state battery module. More specifically, the present invention relates to a solid-state battery modularized so as to be able to be mounted on a substrate.

BACKGROUND ART

Conventionally, secondary batteries that can be repeatedly charged and discharged have been used for various applications. For example, the secondary battery is used as a power supply of an electronic device such as a smartphone and a notebook computer. In a secondary battery, a liquid electrolyte is generally used as a medium for ion transfer that contributes to charging and discharging. That is, a so-called electrolytic solution is used for the secondary battery. However, in such a secondary battery, safety is generally required in terms of preventing leakage of the electrolytic solution. Since an organic solvent or the like used for the electrolytic solution is a flammable substance, safety is required also in that respect.

Therefore, a solid-state battery using a solid electrolyte instead of the electrolytic solution has been studied. A solid-state battery has a battery element including a positive electrode layer, a negative electrode layer, and a solid electrolyte interposed between electrode layers of the positive electrode layer and the negative electrode layer.

PRIOR ART DOCUMENT

PATENT DOCUMENT

Patent Document 1: Japanese Patent Application Laid-Open No. 2018-160968

SUMMARY OF THE INVENTION

Problem to be solved by the invention

Herein, in a case where the temperature of the battery is low at the time of charging the battery, it is known that the charging efficiency decreases, and from the viewpoint of suppressing the decrease in the charging efficiency, an aspect of raising the temperature of the battery can be adopted. In this viewpoint, there is an aspect in which the temperature of a battery is raised using a heating element that generates heat by receiving an electromagnetic wave provided at the time of non-contact power supply, that is, wireless power supply, and the battery is charged based on power generated using the electromagnetic wave (refer to Patent Document 1).

In the above aspect, it is premised that a heating element specialized for the temperature rise of the battery, that is, a heating unit is used, and thus the inventor of the present application has found that there may be an improvement for achieving efficient temperature rise of the battery.

The present invention has been made in view of such problems. That is, an object of the present invention is to provide a solid-state battery module capable of suitably raising the temperature of a solid-state battery.

Means for solving the problem

A solid-state battery module according to the present invention includes a substrate, a solid-state battery disposed on the substrate, and a wireless power supply circuit including a capacitor, in which at least the capacitor and the solid-state battery are disposed on a same main surface side of the substrate.

Advantageous effect of the invention

The solid-state battery module of the present invention can suitably raise the temperature of the solid-state battery that is a constituent element of the solid-state battery module.

BRIEF EXPLANATION OF DRAWINGS

> FIG. 1 is a sectional view schematically illustrating the configuration of a solid-state battery module according to an embodiment of the present invention.
> FIG. 2 is a circuit diagram of a wireless power supply circuit (power receiving unit) included in the solid-state battery module of FIG. 1 and a power transmitting unit provided outside.
> FIG. 3 is a sectional view schematically illustrating the configuration of a solid-state battery module according to an embodiment of the present invention.
> FIG. 4 is a circuit diagram of a wireless power supply circuit (power receiving unit) included in the solid-state battery module of FIG. 3 and a power transmitting unit provided outside.
> FIG. 5 is a plan view schematically illustrating positions of capacitors disposed in the solid-state battery module of FIG. 1.
> FIG. 6 is a sectional view schematically illustrating the configuration of a solid-state battery module according to an embodiment of the present invention.
> FIG. 7 is a circuit diagram of a wireless power supply circuit (power receiving unit) included in the solid-state battery module of FIG. 6 and a power transmitting unit provided outside.
> FIG. 8 is a sectional view schematically illustrating the configuration of a solid-state battery module according to an embodiment of the present invention.

FIG. 9 is a circuit diagram of a wireless power supply circuit (power receiving unit) included in the solid-state battery module of FIG. 8 and a power transmitting unit provided outside.

FIG. 10 is a sectional view schematically illustrating the configuration of a solid-state battery module according to an embodiment of the present invention.

FIG. 11 is a circuit diagram of a wireless power supply circuit (power receiving unit) included in the solid-state battery module of FIG. 10 and a power transmitting unit provided outside.

FIG. 12 is a sectional view schematically illustrating the configuration of a solid-state battery module according to an embodiment of the present invention.

FIG. 13 is a circuit diagram of a wireless power supply circuit (power receiving unit) included in the solid-state battery module of FIG. 12 and a power transmitting unit provided outside.

FIG. 14 is a sectional view schematically illustrating the configuration of a solid-state battery module according to an embodiment of the present invention.

FIG. 15 is a circuit diagram of a wireless power supply circuit (power receiving unit) included in the solid-state battery module of FIG. 14 and a power transmitting unit provided outside.

FIG. 16 is a sectional view schematically illustrating the configuration of a solid-state battery module according to an embodiment of the present invention.

FIG. 17 is a circuit diagram of a wireless power supply circuit (power receiving unit) included in the solid-state battery module of FIG. 16 and a power transmitting unit provided outside.

FIG. 18 is a sectional view schematically illustrating the configuration of a solid-state battery module according to an embodiment of the present invention.

FIG. 19 is a sectional view schematically illustrating the configuration of a solid-state battery module according to an embodiment of the present invention.

FIG. 20 is a sectional view schematically illustrating the configuration of a solid-state battery module according to an embodiment of the present invention.

FIG. 21A is a step sectional view schematically illustrating a process for manufacturing a solid-state battery module according to an embodiment of the present invention.

FIG. 21B is a step sectional view schematically illustrating a process for manufacturing a solid-state battery module according to an embodiment of the present invention.

FIG. 21C is a step sectional view schematically illustrating a process for manufacturing a solid-state battery module according to an embodiment of the present invention.

FIG. 21D is a step sectional view schematically illustrating a process for manufacturing a solid-state battery module according to an embodiment of the present invention.

MODE FOR CARRYING OUT THE INVENTION

Hereinafter, a solid-state battery module according to an embodiment of the present invention will be described in detail. Although the description will be made with reference to the drawings as necessary, the illustrated contents are only schematically and exemplarily illustrated for the understanding of the present invention, and the appearance, the dimensional ratio, or the like may be different from the actual ones.

The "solid-solid-state battery module" as used in the present description refers in a broad sense to a composite device including a plurality of components including a solid-state battery, and in a narrow sense to a composite device including a solid-state battery, a circuit element, a circuit connecting them, and a substrate.

The "sectional view" as used in the present description is based on a form (briefly, a form in the case of being cut along a plane parallel to the layer thickness direction) viewed from a direction substantially perpendicular to the stacking direction in the stacked structure of the solid-state battery. In addition, the "plan view" or "plan view shape" used in the present description is based on a sketch drawing when an object is viewed from an upper side or a lower side along the layer thickness direction (that is, the stacking direction mentioned above).

The "vertical direction" and "horizontal direction" used directly or indirectly in the present description correspond to a vertical direction and a horizontal direction in the drawings, respectively. Unless otherwise specified, the same reference numerals or symbols indicate the same members/portions or the same semantic contents. In a preferred aspect, it can be understood that a downward direction in a vertical direction (that is, a direction in which gravity acts) corresponds to a "downward direction"/a "bottom surface side", and the opposite direction thereof corresponds to an "upward direction"/a "top surface side".

The "solid-state battery" referred to in the present invention refers to a battery with the constituent elements being solid in a broad sense, and refers to an all-solid-state battery with all constituent elements being solid in a narrow sense. In a preferred aspect, the solid-state battery in the present invention is a stacked solid-state battery configured such that layers constituting a battery constituent unit are stacked on each other, and such layers are preferably made of fired bodies. The "solid-state battery" encompasses not only a so-called "secondary battery" that can be repeatedly charged and discharged but also a "primary battery" that can only be discharged. According to a preferred aspect of the present invention, the "solid-state battery" is a secondary battery. The "secondary battery" is not excessively restricted by its name, which can encompass, for example, a power storage device and the like. In the present invention, the solid-state battery included in the module can also be referred to as a "solid-state battery element".

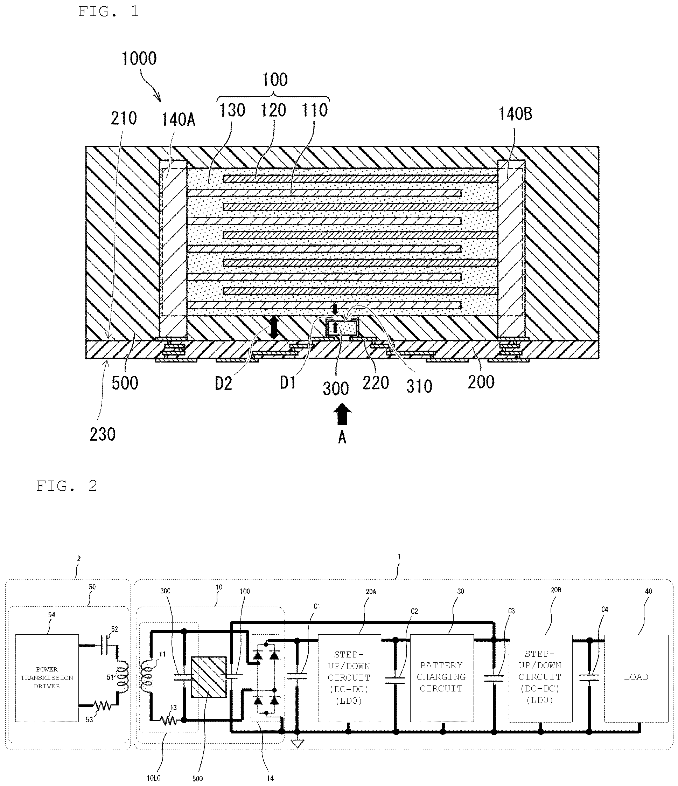

FIG. 1 is a sectional view schematically illustrating the configuration of a modularized solid-state battery according to an embodiment of the present invention. As shown in FIG. 1, a solid-state battery module 1000 according to an embodiment of the present invention includes a solid-state battery 100 provided on a substrate 200. Specifically, the solid-state battery module 1000 includes the substrate 200 adapted for mounting and the solid-state battery 100 provided on the substrate 200 and protected from the external environment.

[Basic Configuration of Solid-State Battery]

Hereinafter, the basic configuration of the solid-state battery 100 will be first described. The configuration of the solid-state battery described here is merely an example for understanding the invention, and not considered limiting the invention. The solid-state battery 100 includes at least electrode layers: a positive electrode and a negative electrode, and a solid electrolyte. Specifically, the solid-state battery 100 has a battery element including a battery constituent unit including a positive electrode layer 110, a negative electrode layer 120, and a solid electrolyte 130 at least interposed therebetween.

For the solid-state battery 100, each layer constituting the solid-state battery 100 may be formed by firing, and the positive electrode layer, the negative electrode layer, the solid electrolyte, and the like may form fired layers. Preferably, the positive electrode layer, the negative electrode layer, and the solid electrolyte are fired integrally with each other, and therefore the battery element preferably forms an integrally fired body.

The positive electrode layer is an electrode layer containing at least a positive electrode active material. The positive electrode layer may further contain a solid electrolyte. In a preferred aspect, the positive electrode layer may be formed of a fired body including at least positive electrode active material particles and a solid electrolyte. In contrast, the negative electrode layer is an electrode layer containing at least a negative electrode active material. The negative electrode layer may further contain a solid electrolyte. In a preferred aspect, the negative electrode layer may be formed of a fired body including at least negative electrode active material particles and a solid electrolyte.

The positive electrode active material and the negative electrode active material are substances involved in the transfer of electrons in the solid-state battery. Ions move (or conduct) between the positive electrode layer and the negative electrode layer with the solid electrolyte interposed therebetween to accept and donate electrons, whereby charging and discharging are performed. Each electrode layer of the positive electrode layer and the negative electrode layer is preferably a layer capable of occluding and releasing lithium ions or sodium ions, in particular. More particularly, the solid-state battery is preferably an all-solid-state secondary battery in which lithium ions or sodium ions move between the positive electrode layer and the negative electrode layer with the solid electrolyte interposed therebetween, thereby charging and discharging the battery.

(Positive Electrode Active Material)

Examples of the positive electrode active material included in the positive electrode layer 110 include at least one type selected from the group consisting of lithium-containing phosphate compounds that have a NASICON-type structure, lithium-containing phosphate compounds that have an olivine-type structure, lithium-containing layered oxides, lithium-containing oxides that have a spinel-type structure, and the like. Examples of the lithium-containing phosphate compounds that have a NASICON-type structure include $Li_3V_2(PO_4)_3$. Examples of the lithium-containing phosphate compounds that have an olivine-type structure include $Li_3Fe_2(PO_4)_3$, $LiFePO_4$, and/or $LiMnPO_4$. Examples of the lithium-containing layered oxides include $LiCoO_2$ and/or $LiCo_{1/3}Ni_{1/3}Mn_{1/3}O_2$. Examples of the lithium-containing oxides that have a spinel-type structure include $LiMn_2O_4$ and/or $LiNi_{0.5}Mn_{1.5}O_4$. The type of the lithium compounds is not particularly limited, and may be regarded as, for example, a lithium-transition metal composite oxide and a lithium-transition metal phosphate compound. The lithium-transition metal composite oxide is a generic term for oxides containing lithium and one or two or more types of transition metal elements as constituent elements, and the lithium transition metal phosphate compound is a generic term for phosphate compounds containing lithium and one or two or more types of transition metal elements as constituent elements. The types of transition metal elements are not particularly limited and are, for example, cobalt (Co), nickel (Ni), manganese (Mn), iron (Fe), and the like.

In addition, examples of positive electrode active materials capable of occluding and releasing sodium ions include at least one selected from the group consisting of sodium-containing phosphate compounds that have a NASICON-type structure, sodium-containing phosphate compounds that have an olivine-type structure, sodium-containing layered oxides, and sodium-containing oxides that have a spinel-type structure. For example, in the case of the sodium-containing phosphate compounds, examples thereof include at least one type selected from the group consisting of $Na_3V_2(PO_4)_3$, $NaCoFe_2(PO_4)_3$, $Na_2Ni_2Fe(PO_4)_3$, $Na_3Fe_2(PO_4)_3$, $Na_2FeP_2O_7$, $Na_4Fe_3(PO_4)_2(P_2O_7)$, and $NaFeO_2$ as a sodium-

containing layered oxide.

In addition, the positive electrode active material may be, for example, an oxide, a disulfide, a chalcogenide, a conductive polymer, or the like. The oxide may be, for example, a titanium oxide, a vanadium oxide, a manganese dioxide, or the like. The disulfide is, for example, a titanium disulfide, a molybdenum sulfide, or the like. The chalcogenide may be, for example, a niobium selenide or the like. The conductive polymer may be, for example, a disulfide, a polypyrrole, a polyaniline, a polythiophene, a poly-para-styrene, a polyacetylene, a polyacene, or the like.

(Negative Electrode Active Material)

Examples of the negative electrode active material included in the negative electrode layer 120 include at least one type selected from the group consisting of oxides containing at least one element selected from the group consisting of titanium (Ti), silicon (Si), tin (Sn), chromium (Cr), iron (Fe), niobium (Nb), and molybdenum (Mo), carbon materials such as graphite, graphite-lithium compounds, lithium alloys, lithium-containing phosphate compounds that have a NASICON-type structure, lithium-containing phosphate compounds that have an olivine-type structure, and lithium-containing oxides that have a spinel-type structure. Examples of the lithium alloys include Li-Al. Examples of the lithium-containing phosphate compounds that have a NASICON-type structure include $Li_3V_2(PO_4)_3$ and/or $LiTi_2(PO_4)_3$. Examples of the lithium-containing phosphate compounds that have an olivine-type structure include $Li_3Fe_2(PO_4)_3$ and/or $LiCuPO_4$. Examples of the lithium-containing oxides that have a spinel-type structure include $Li_4Ti_5O_{12}$.

In addition, examples of negative electrode active materials capable of occluding and releasing sodium ions include at least one type selected from the group consisting of sodium-containing phosphate compounds that have a NASICON-type structure, sodium-containing phosphate compounds that have an olivine-type structure, and sodium-containing oxides that have a spinel-type structure.

Further, in the solid-state battery, the positive electrode layer and the negative electrode layer are made of the same material.

The positive electrode layer and/or the negative electrode layer may include a conductive material. Examples of the conductive material included in the positive electrode layer and the negative electrode layer include at least one type of metal materials such as silver, palladium, gold, platinum, aluminum, copper, and nickel, and carbon.

Further, the positive electrode layer and/or the negative electrode layer may include a sintering aid. Examples of the sintering aid include at least one type selected from the group consisting of a lithium oxide, a sodium oxide, a potassium oxide, a boron oxide, a silicon oxide, a bismuth oxide, and a phosphorus oxide.

The thicknesses of the positive electrode layer and negative electrode layer are not particularly limited, but may be each independently, for example, 2 μm or more and 50 μm or less, particularly 5 μm or more and 30 μm or less.

(Positive Electrode Current Collecting Layer/Negative Electrode Current Collecting Layer)

Although not an essential element for the electrode layer, the positive electrode layer 110 and the negative electrode layer 120 may respectively include a positive electrode current collecting layer and a negative electrode current collecting layer. The positive electrode current collecting layer and the negative electrode current collecting layer may each have the form of a foil. The positive electrode current collecting layer and the negative electrode current collecting layer may each have, however, the form of a fired body, if more importance is placed on viewpoints such as improving the electron conductivity, reducing the manufacturing cost of the solid-state battery, and/or reducing the internal resistance of the solid-state battery by integral firing. As the positive electrode current collector constituting the positive electrode current collecting layer and the negative electrode current collector constituting the negative electrode current collector, it is preferable to use a material with a high conductivity, and for example, silver, palladium, gold, platinum, aluminum, copper, and/or nickel may be used. The positive electrode current collector and the negative electrode current collector may each have an electrical connection portion for being electrically connected to the outside, and may be configured to be electrically connectable to an end surface electrode. When the positive electrode current collecting layer and the negative electrode current collecting layer have the form of a fired body, the layers may be formed of a fired body including a conductive material and a sintering aid. The conductive material included in the positive electrode current collecting layer and the negative electrode current collecting layer may be selected from, for example, the same materials as the conductive materials that can be included in the positive electrode layer and the negative electrode layer. The sintering aid included in the positive electrode current collecting layer and the negative electrode current collecting layer may be selected from, for example, the same materials as the sintering aids that can be included in the positive electrode layer/the negative electrode layer. As described above, in the solid-state battery, the positive electrode current collecting layer and the negative electrode current collecting layer are not essential, and a solid-state battery provided without such a positive electrode current collecting layer or a negative electrode current collecting layer is also conceivable. More particularly, the solid-state battery included in the module of the present invention may be a solid-state battery without any current collecting layer.

(Solid Electrolyte)

The solid electrolyte is a material capable of conducting lithium ions or sodium ions. In particular, the solid electrolyte layer 130 that forms the battery constituent unit in the solid-state battery may form a layer capable of conducting lithium ions between the positive electrode layer 110 and the negative electrode layer 120. The solid electrolyte layer has only to be provided at least between the positive electrode layer and the negative electrode layer. More particularly, the solid electrolyte layer may be present around the positive electrode layer and/or the negative electrode layer so as to protrude from between the positive electrode layer and the negative electrode layer. Specific examples of the solid electrolyte included in the solid electrolyte layer include any one type, or two or more types of a crystalline solid electrolyte, a glass-based solid electrolyte, and a glass ceramic-based solid electrolyte.

Examples of the crystalline solid electrolyte include oxide-based crystal materials and sulfide-based crystal materials. Examples of the oxide-based crystal materials include lithium-containing phosphate compounds that have a NASICON structure, oxides that have a perovskite structure, oxides that have a garnet-type or garnet-type similar structure, and oxide glass ceramic-based lithium ion conductors. Examples of the lithium-containing phosphate compound that has a NASICON structure include $Li_xM_y(PO_4)_3$ ($1 \leq x \leq 2$, $1 \leq y \leq 2$, M is at least one type selected from the group consisting of titanium (Ti), germanium (Ge), aluminum (Al), gallium (Ga), and zirconium (Zr)). An example of the lithium-containing phosphate compound having a NASICON structure includes $Li_{1.2}Al_{0.2}Ti_{1.8}(PO_4)_3$. An example of the oxides that have a perovskite structure includes $La_{0.55}Li_{0.35}TiO_3$. An example of the oxides that have a garnet-type or garnet-type similar structure include $Li_7La_3Zr_2O_{12}$. In addition, examples of the sulfide-based crystal materials include thio-LISICON, for example, $Li_{3.25}Ge_{0.25}P_{0.75}S4$ and $Li_{10}GeP_2S_{12}$. The crystalline solid electrolyte may contain a polymer material (for example, a polyethylene oxide (PEO)).

Examples of the glass-based solid electrolyte include oxide-based glass materials and sulfide-based glass materials. Examples of the oxide-based glass materials include $50Li_4SiO_4$-$50Li_3BO_3$. In addition, examples of the sulfide-based glass materials include $30Li_2S$-$26B_2S_3$-$44LiI$, $63Li_2S$-$36SiS_2$-$1Li_3PO_4$, $57Li_2S$-$38SiS_2$-$5Li_4SiO_4$, $70Li_2S$-$30P_2S_5$, and $50Li_2S$-$50GeS_2$.

Examples of the glass ceramic-based solid electrolyte include oxide-based glass ceramic materials and sulfide-based glass ceramic materials. As the oxide-based glass ceramic materials, for example, a phosphate compound (LATP) containing lithium, aluminum, and titanium as constituent elements, and a phosphate compound (LAGP) containing lithium, aluminum, and germanium as constituent elements can be used. LATP is, for example, $Li_{1.07}Al_{0.69}Ti_{1.46}(PO_4)_3$. LAGP is, for example, $Li_{1.5}Al_{0.5}Ge_{1.5}(PO_4)$. In addition, examples of the sulfide-based glass ceramic materials include $Li_7P_3S_{11}$ and $Li_{3.25}P_{0.95}S_4$.

In addition, examples of the solid electrolyte capable of conducting sodium ions include sodium-containing phosphate compounds that have a NASICON structure, oxides that have a perovskite structure, and oxides that have a garnet-type or garnet-type similar structure. Examples of the sodium-containing phosphate compounds that have a NASICON structure include $Na_xM_y(PO_4)_3$ ($1 \leq x \leq 2$, $1 \leq y \leq 2$, and M is at least one type selected from the group consisting of Ti, Ge, Al, Ga, and Zr).

The solid electrolyte layer may contain a sintering aid. The sintering aid contained in the solid electrolyte layer may be selected from, for example, a material similar to the sintering aid that can be contained in the positive electrode layer or the negative electrode layer.

The thickness of the solid electrolyte is not particularly limited. The thickness of the solid electrolyte located between the positive electrode layer and the negative electrode layer may be, for example, 1 μm or more and 50 μm or less, 1 μm or more and 15 μm or less, 10 μm or more and 40 μm or less, particularly 1 μm or more and 5 μm or less.

(End Surface Electrode)

The solid-state battery is typically provided with end surface electrodes 140. In particular, the end surface electrode is provided on the side surface of the solid-state battery. More specifically, a positive-electrode-side end surface electrode 140A connected to the positive electrode layer 110 and a negative-electrode-side end surface electrode 140B connected to the negative electrode layer 120 are provided (refer to FIG. 1). Such end surface electrodes preferably contain a material having high conductivity. The specific material of the end surface electrodes is not particularly limited, but examples thereof include at least one type selected from the group consisting of silver, gold, platinum, aluminum, copper, tin, and nickel.

[Basic configuration of solid-state battery module]

A basic configuration of the solid-state battery module will be described below. As described above, a solid-state battery module 1000 according to an embodiment of the present invention includes a substrate 200 and a solid-state battery 100 provided on the substrate 200 (refer to FIG. 1). Therefore, interposing the substrate 200 between the solid-state battery 100 and an external substrate or the like can also suppress the entry of water vapor into the solid-state battery 100.

As illustrated in FIG. 1, the substrate 200 has, for example, a main surface larger than the solid-state battery. As the substrate 200, a printed circuit board can be used. The type is not particularly limited, and may be a resin substrate or a ceramic substrate. Further, a rigid substrate or a flexible substrate may be used. Examples of the ceramic substrate include an alumina substrate, an LTCC substrate, and an HTCC substrate. The resin substrate may be produced from a material in which a substrate is impregnated with a resin. Examples of the substrate include paper, glass fiber cloth, and resin film. The resin may be a thermoplastic resin and/or a thermosetting resin. Examples thereof include a paper phenol substrate in which a paper substrate is impregnated with a phenol resin, a paper epoxy substrate in which a paper substrate is impregnated with an epoxy resin, a glass epoxy substrate in which a glass fiber cloth is impregnated with an epoxy resin, and a flexible substrate using a polyimide or a polyethylene terephthalate (PET) resin. For the wiring provided on the substrate, at least one or more types of metals selected from the group consisting of Cu, Ni, Ag, Au, and Pt may be used.

The substrate is preferably a member for electrically connecting the modularized solid-state battery and the outside. More particularly, the substrate can be also considered as a terminal substrate for an external terminal of the solid-state battery. The solid-state battery module provided with such a substrate allows the solid-state battery to be mounted on another secondary substrate such as a printed wiring board, with the substrate interposed therebetween. For example, surface mounting can be performed using solder or a conductive paste. For the reasons described above, the solid-state battery module according to the present invention is preferably a surface-mount-device (SMD) type battery module.

[Characteristic Parts of the Present Invention]

Hereinafter, characteristic parts of the present invention will be described. Description will be made with reference to the drawings. The illustrated contents are only schematically and exemplarily shown for understanding of the present invention, and appearance, dimensional ratios, and the like may be different from actual ones. In the drawings, members having the same function may be denoted by the same reference numerals. In the embodiment to be described later, descriptions of matters common to those described above may be omitted, and only different points may be described. In addition, various embodiments described later may be implemented in any combination, and are not limited only to the embodiments described in the present application.

As illustrated in FIG. 1, a solid-state battery module 1000 according to an embodiment includes a wireless power supply circuit including a substrate 200, a solid-state battery 100 disposed on the substrate 200, and a capacitor 300. At least the capacitor 300 and the solid-state battery 100 are disposed on the same main surface side of the substrate 200.

The substrate 200 has two main surfaces facing each other. The capacitor 300 is disposed on one main surface side of the substrate 200 with the wiring 220 interposed therebetween. In other words, the capacitor 300 is positioned on one main surface side of the substrate 200 with the wiring 220 interposed therebetween. The solid-state battery 100 is disposed on one main surface side of the substrate 200 with the end surface electrode 140 interposed therebetween. In other words, the solid-state battery 100 is positioned on one main surface side of the substrate 200 with the end surface electrode 140 interposed therebetween. Herein, the capacitor 300 and the solid-state battery 100 are disposed on the same main surface side among the main surfaces of the substrate 200. That is, capacitor 300 is disposed on the same main surface side as the main surface side of the substrate 200 on which solid-state battery 100 is provided. In other words, the solid-state battery 100 is disposed on the same main surface side as the main surface side of the substrate 200 on which the capacitor 300 is provided.

The wireless power supply circuit may be mounted on the substrate 200 (not shown). Power can be transmitted to the solid-state battery module 1000 from a power transmission circuit provided outside. Specifically, the wireless power supply circuit receives an electromagnetic wave (alternating magnetic field) generated in the power transmission circuit, thereby allowing an induced current to flow in the wireless power supply circuit. The induced current flowing through the wireless power supply circuit may flow to a capacitor in the circuit. When a current flows through the capacitor, Joule heat is generated by a resistance component (internal resistance) of the capacitor, and the capacitor can generate heat.

According to this aspect, the solid-state battery module of the present disclosure can achieve the following effects.

Conventionally, a battery temperature is raised using a heating element that generates heat by receiving an electromagnetic wave provided at the time of wireless power supply, and the battery is charged based on power generated using the electromagnetic wave. In such a method, it is premised that a heating element specialized for raising the temperature of the battery is used. In order to raise the temperature of the battery by the heating element, it is necessary to irradiate the electromagnetic wave generated by the heating element efficiently, but the electromagnetic wave used when the battery is charged is not necessarily the electromagnetic wave generated by the heating element efficiently. Therefore, it was difficult for the heating element to efficiently raise the temperature of the battery.

In the solid-state battery module of the present disclosure, the capacitor can generate heat when the solid-state battery is charged. At least the capacitor and the solid-state battery are disposed on the same main surface side of the substrate, and thus the heat of the capacitor is transferred to the solid-state battery, and the temperature of the solid-state battery can be raised. In other words, the capacitor used for charging the solid-state battery by wireless power supply can also function as a temperature-raising device of the solid-state battery. Therefore, in the present disclosure, it is possible to suitably raise the temperature of the solid-state battery in the charging of the solid-state battery by the wireless power supply.

In addition, conventionally, in order to perform both wireless power supply and temperature rise of a battery, it is necessary to select a material from which a heating element efficiently generates heat by an electromagnetic wave used for wireless power supply. In addition, the electromagnetic wave used for wireless power supply may heat a metal other than the heating element, and thus members and configurations of the secondary battery module are likely to be limited.

In the solid-state battery module of the present disclosure, the capacitor used for charging the solid-state battery by wireless power supply can function as a temperature-raising device of the solid-state battery. Therefore, it is possible to omit the heating element specialized for the temperature rise of the battery as in the prior art, and it is difficult to limit the members and the configurations of the secondary battery module. That is, the heating element can be omitted, and thus it is easy to secure a space for providing other battery components and the like. In addition, the heating element can be omitted, and thus, as a result, consumption of electric energy or the like necessary for driving the entire solid-state battery module can be reduced.

FIG. 2 shows a circuit diagram including a wireless power supply circuit according to an embodiment, and charging of a solid-state battery by wireless power supply will be described.

The circuit diagram of FIG. 2 includes a power receiving unit 1 and a power transmitting unit 2. The power receiving unit 1 is also referred to as a wireless power supply circuit because power can be wirelessly transmitted from the power transmitting unit 2. A power receiving unit 1 includes a power receiving circuit 10, step-up/down circuits 20A and 20B, a battery charging circuit 30, and a load 40. A power transmitting unit 2 includes a power transmission circuit 50.

First, a specific configuration of the power receiving unit 1 will be described.

Power can be wirelessly transmitted from the power transmitting unit 2 to the power receiving circuit 10. The power receiving circuit 10 includes a power receiving coil 11, a capacitor 300, a resistor 13, and a rectifier circuit 14.

The power receiving coil 11 generates an induced current by receiving an electromagnetic wave from the power transmitting unit 2. The power receiving coil 11 and capacitor 300 are electrically connected to each other. Specifically, the power receiving coil 11 and capacitor 300 are connected in parallel to each other. When the induced current flows through the capacitor 300, Joule heat is generated by a resistance component (internal resistance) of the capacitor 300, and the capacitor 300 can generate heat. The capacitor 300 can be provided on the same main surface side as the main surface side of the substrate 200 on which the solid-state battery 100 is provided, and thus the solid-state battery 100 is heated by the heat generated in the capacitor 300. The resistor 13 in the power receiving circuit 10 may be, for example, a resistance component of the power receiving coil 11.

The rectifier circuit 14 rectifies an induced current generated by the power receiving coil 11, and converts an alternating current into a direct current. In FIG. 2, the rectifier circuit 14 is represented by a diode bridge circuit. A smoothing capacitor C1 is connected to the output of the rectifier circuit 14, and the output voltage output from the rectifier circuit is smoothed.

The voltage smoothed after rectification is input to the step-up/down circuit 20A. The step-up/down circuit 20A performs voltage conversion of the input voltage. For the step-up/down circuit 20A, for example, a DC-DC converter, a low dropout regulator (LDO), or the like may be used. A smoothing capacitor C2 is connected to the output of the step-up/down circuit 20A, and the output voltage output from the step-up/down circuit 20A is smoothed. The smoothed output voltage of the step-up/down circuit 20A is input to the battery charging circuit 30 that performs charge control of the solid-state battery. The output voltage from battery charging circuit 30 is smoothed by the smoothing capacitor C3 and input to the solid-state battery 100, whereby the solid-state battery 100 is charged. The output voltage from the battery charging circuit 30 is voltage-converted by the step-up/-down circuit 20B. The output voltage from the step-up/-down circuit 20B is smoothed by the smoothing capacitor C4 and then consumed by the load 40. For the step-up/down circuit 20B, for example, a DC-DC converter, a low dropout regulator (LDO), or the like may be used.

The power receiving unit may be mounted on a substrate of the solid-state battery module (not shown). Specifically, the wireless power supply circuit may be mounted on a substrate. Specifically, at least a part of the circuit and the circuit element constituting the wireless power supply circuit may be provided on the main surface side of the substrate on which the solid-state battery is disposed and/or on the main surface opposite to the main surface of the substrate on which the solid-state battery is disposed.

As the capacitor, for example, a ceramic capacitor, an electrolytic capacitor, and/or a film capacitor may be used. It is preferable to use a surface mount (SMD) capacitor from the viewpoint of mounting the capacitor on a substrate. As such a capacitor, a multilayer ceramic capacitor (MLCC) may be used. The multilayer ceramic capacitor has relatively high heat resistance and is easily downsized, and thus can contribute to downsizing of the solid-state battery module. The capacitor used in the present disclosure can be obtained as a commercially available product.

The capacitor may be mounted on the substrate by, for example, solder and/or a conductive resin.

The solder is not particularly limited, but at least one type selected from the group consisting of Sn, Sb, Zn, Al, Bi, Cu, Ag, and Pb may be used. Specifically, at least one type selected from the group consisting of SnAgCu-based, SnAg-based, SnSb-based, AuSn-based, and AlZn-based may be used.

The conductive resin may be, for example, a conductive paste, and is made of, for example, a resin material containing a conductive filler. As the conductive paste, an Ag paste, a Cu paste, a Ni paste, a carbon paste, or the like may be used. As the conductive filler, at least one type selected from the group consisting of nickel, copper, aluminum, gold, carbon, and the like may be used, and as the resin material, at least one type selected from the group consisting of an epoxy-based resin, an acrylic-based resin, a silicone-based resin, a urethane-based resin, and the like may be used.

The power receiving unit may further include another circuit. For example, the power receiving unit may be provided with a wireless communication (wi-fi, Bluetooth, NFC, RF-ID, Zig-Bee, specific low power radio, and/or the like) circuit, a protection circuit, a current path circuit, a sensor circuit, and/or the like.

In one embodiment, another circuit that can be included in the power receiving unit may be provided on the main surface side of the substrate on which the capacitor is provided. In other words, another circuit included in the power receiving unit may be provided on the same plane of the substrate on which the capacitor is mounted. Examples of the other circuit may include a battery charging circuit, a booster circuit (DC-DC), a step-down circuit (DC-DC, LDO), a wireless power supply/reception circuit, a wireless communication (wi-fi, Bluetooth, NFC, RF-ID, Zig-Bee, specific low power radio, and/or the like) circuit, a protection circuit, a current path circuit, and/or a sensor circuit.

Then, a specific configuration of the power transmitting unit 2 will be described.

A power transmission circuit 50 includes a power transmission coil 51, a capacitor 52, a resistor 53, and a power transmission driver 54. The power transmission driver 54 includes an alternating current power supply, and causes an alternating current to flow through the power transmission circuit 50. When an alternating current flows through the power transmission coil 51, an electromagnetic wave (alternating magnetic field) is generated in the power transmission coil 51. When the electromagnetic wave is received by the power receiving unit 1, power is transmitted from the power transmitting unit 2 to the power receiving unit 1. The resistor 53 in the power transmission circuit 50 may be, for example, a resistance component of the power transmission coil 51.

The solid-state battery module of the present disclosure can further adopt the following aspects.

In an embodiment, as shown in FIG. 1, a capacitor 300 may be disposed on the substrate 200. The capacitor 300 can be disposed in contact with a main surface 210 (hereinafter, also referred to as a first main surface) of the substrate 200 on the side facing the solid-state battery 100. Specifically, the capacitor 300 may be mounted on the surface of the substrate 200 with a mounting pad interposed therebetween. The solid-state battery 100 is disposed on the substrate 200, and thus the separation distance between the capacitor 300 and the solid-state battery 100 is further shortened by adopting such an aspect. Therefore, the temperature of the solid-state battery 100 is more easily raised by the heat generated from the capacitor 300.

In an embodiment, as shown in FIG 1, the capacitor 300 may be provided between the solid-state battery 100 and the substrate 200. That is, the capacitor 300 can be disposed below the solid-state battery 100. Viewed from another aspect, the capacitor 300 can be disposed in a region where the solid-state battery 100 and the substrate 200 overlap each other. Adopting such an aspect positions the capacitor 300 and the solid-state battery 100 closer to each other. In other words, the capacitor 300 and the solid-state battery 100 are closer to each other, and the heat generated from the capacitor 300 is easily efficiently transferred to the solid-state battery 100. In particular, an all-solid-state battery having a relatively high internal resistance of the battery is expected to have a higher effect because a decrease in resistance due to temperature rise is relatively large.

As shown in FIG. 1, when the capacitor 300 is provided between the solid-state battery 100 and the substrate 200, minimum distance D1 between a facing surface 310 of the capacitor 300 facing the solid-state battery 100 and the solid-state battery 100 may be smaller than minimum distance D2 between the solid-state battery 100 and the substrate 200 in a cross-sectional view. The minimum distance D2 between the solid-state battery 100 and the substrate 200 can be set to a minimum distance between the surface of the solid-state battery 100 other than an end surface electrode 140 of the solid-state battery 100 and the substrate 200. For example, the minimum distance D1 may be more than 0% and 50% or less of the minimum distance D2 between the solid-state battery 100 and the substrate 200, and preferably more than 0% and 30% or less. When the minimum distance D1 is in the above range, heat generated from the capacitor is more easily conducted by the solid-state battery 100.

In one embodiment, the capacitor is preferably a matching capacitor. In other words, the capacitor in the power receiving circuit of the present disclosure preferably resonates. Specifically, the matching capacitor preferably resonates with the power receiving coil at a predetermined frequency. The matching capacitor has a parallel resonance effect with the power receiving coil (inductance) at the resonance frequency $f_0$. The resonance frequency $f_0$ is represented by the following formula (1):

<Formula 1>

$$f_0 = \frac{1}{(2\pi\sqrt{(LC)})} \qquad (1)$$

[in the formula (1),

L is inductance (H),
C is the capacitance (F)]. The power reception current flowing through the circuit including the matching capacitor increases with the resonance frequency $f_0$ as a peak.

As described above, the matching capacitor can resonate with the power receiving coil when the formula (1) is satisfied, and thus the matching capacitor is also referred to as a resonance capacitor. In the circuit diagram of FIG. 2, the circuit including the capacitor 300 and the power receiving coil 11 is also referred to as a resonance circuit 10LC.

The matching capacitor and the power receiving coil resonate with each other, thereby increasing the power reception current, and thus the matching capacitor though which the increased power reception current has flowed can then suitably generate heat. Specifically, in the matching capacitor through which the increased power reception current flows, power is consumed in a relationship of $P = RI^2$ due to the internal resistance thereof, and heat can be generated. That is, the heat generated from the capacitor is a value related to the square of the current value, and thus the capacitor further generates heat by the power reception current increased by resonance, and the solid-state battery can be suitably heated.

The frequency at which the power receiving coil and the matching capacitor resonate in the resonance circuit may be a frequency conventionally used in wireless power supply. For example, the resonance frequency $f_0$ may be 100 kHz or more and 10 GHz or less. Alternatively, the frequency may conform to a wireless power supply standard. For example, the frequency may be a frequency used for the Qi standard.

In the resonance circuit, as described above, the power reception current increases with the resonance frequency $f_0$ as a peak. In one aspect, the frequency of the power reception current consumed as heat generated in the matching capacitor is not necessarily matched with the resonance frequency $f_0$, and may be, for example, a frequency in a range of -20% or more and +20% or less of the resonance frequency $f_0$, preferably a frequency in a range of -15% or more and +15% or less, and more preferably a frequency in a range of -10% or more and +10% or less. If the resonance circuit receives the electromagnetic wave included in the above frequency range and the power reception current increases, the capacitor can be a "matching capacitor". Within the above frequency range, it is easy to efficiently perform both the temperature rise of the solid-state battery and the charging of the solid-state battery.

Resonance between the matching capacitor and the power receiving coil is not limited to resonance due to an electromagnetic wave (alternating magnetic field) generated mainly for power transmission, and for example, the matching capacitor and the power receiving coil may be caused to resonate by wireless data reception.

The resonance between the matching capacitor and the power receiving coil may be, for example, resonance by a magnetic field resonance method. That is, a resonance circuit may be provided in the power transmitting unit, and a resonance circuit that resonates at the same resonance frequency as the resonance circuit of the power receiving unit may be provided in the power transmitting unit. Performing wireless power supply by the magnetic field resonance system improves power transmission efficiency, and both charging of the solid-state battery and heat generation of the capacitor can be efficiently performed.

In one embodiment, the solid-state battery module 1000 may further include a covering portion that covers the solid-state battery and the capacitor. The covering portion 500 is a layer that covers at least the solid-state battery and the capacitor. As shown in FIG. 1, the solid-state battery 100 and the capacitor 300 on the substrate 200 are largely enclosed as a whole by the covering portion 500. In other words, the solid-state battery 100 and the capacitor 300 provided on the substrate 200 may be covered with the covering portion 500 so as to be surrounded as a whole.

Viewed from another aspect, the capacitor may be disposed inside the outer surface of the covering portion covering the solid-state battery. The "inside the outer surface of the covering portion" means a side from the surface of the covering portion exposed to the outside toward the solid-state battery 100. In this aspect, it can be said that the capacitor is provided in the covering portion. When the capacitor is disposed inside the outer surface of the covering portion, heat of the capacitor is more likely to be transferred to the solid-state battery with the covering portion interposed therebetween, and the solid-state battery is more likely to be efficiently heated.

The covering portion covers the solid-state battery and the capacitor to block the solid-state battery from an external environment. As a result, it is possible to suppress deterioration of the battery characteristics due to water vapor (more specifically, a phenomenon where water vapor from the external environment is mixed to deteriorate the characteristics of the solid-state battery). The "water vapor" as used herein is not particularly limited to water in a gaseous state, and also encompasses water in a liquid state and the like. That is, the term "water vapor" is used to broadly include matters related to water regardless of the physical state. Therefore, the "water vapor" can also be referred to as moisture or the like, and in particular, as the water in the liquid state, dew condensation water in which water in a gaseous state is condensed can also be included.

In one embodiment, as shown in FIG. 1, the covering portion 500 may be provided between the solid-state battery 100 and the capacitor 300. In the circuit diagram of FIG. 2, the covering portion 500 is positioned between the capacitor 300 and the solid-state battery 100. Adopting such a configuration can reduce a gap between the solid-state battery 100 and capacitor 300. The covering portion has a relatively higher thermal conductivity than the air gap (air), by providing the covering portion 500 between the solid-state battery 100 and the capacitor 300, thereby easily transferring heat generated from the capacitor to the solid-state battery.

The covering portion may contain a covering insulating layer. The covering insulating layer may be any type as long as it exhibits insulating properties. For example, the covering insulating layer preferably corresponds to a resin layer. That is, the covering insulating layer contains a resin, which preferably constitutes a base material of the layer.

The material of the covering insulating layer may be any type as long as it exhibits insulating properties. For example, the covering insulating layer may include a resin, and the resin may be either a thermosetting resin or a thermoplastic resin. The covering insulating layer may include an inorganic filler. Although it is merely an example, the covering insulating layer may be formed of an epoxy-based resin containing an inorganic filler such as SiC, $SiO_2$, or SiN. The resistivity of the covering insulating layer may be, for example, $10^6$ $\Omega \cdot cm$ or more.

The covering portion may contain a covering inorganic layer. The covering inorganic layer is provided to cover the covering insulating layer. The covering inorganic layer is positioned on the covering insulating layer, and thus has the form of largely wrapping the solid-state battery on the substrate as a whole together with the covering insulating layer. The covering inorganic layer may have, for example, a film form. Further, the covering inorganic layer may cover the side surface of the substrate. The covering insulating layer forms a suitable water vapor barrier together with the covering inorganic layer, and the covering inorganic layer forms a suitable water vapor barrier together with the covering insulating layer.

The term "barrier" as used herein means having such a property of blocking water vapor transmission that water vapor in the external environment does not pass through the substrate to cause undesirable characteristic deterioration for the solid-state battery, and in a narrow sense, means that the water vapor transmission rate is less than $5 \times 10^{-3}$ g/ ($m^2 \cdot$Day). In short, the water vapor barrier layer preferably has a water-vapor transmission rate of 0 or more and less than $5 \times 10^{-3}$ g/ ($m^2 \cdot$Day).

The material of the covering inorganic layer is not particularly limited, and may be metal, glass, oxide ceramics, a mixture thereof, or the like. The covering inorganic layer may correspond to an inorganic layer that has the form of a thin film, which is preferably, for example, a metal film. Although it is merely an example, the covering inorganic layer may be formed of a Cu-based and/or Ni-based material having a thickness of 2 to 50 $\mu m$ formed by plating.

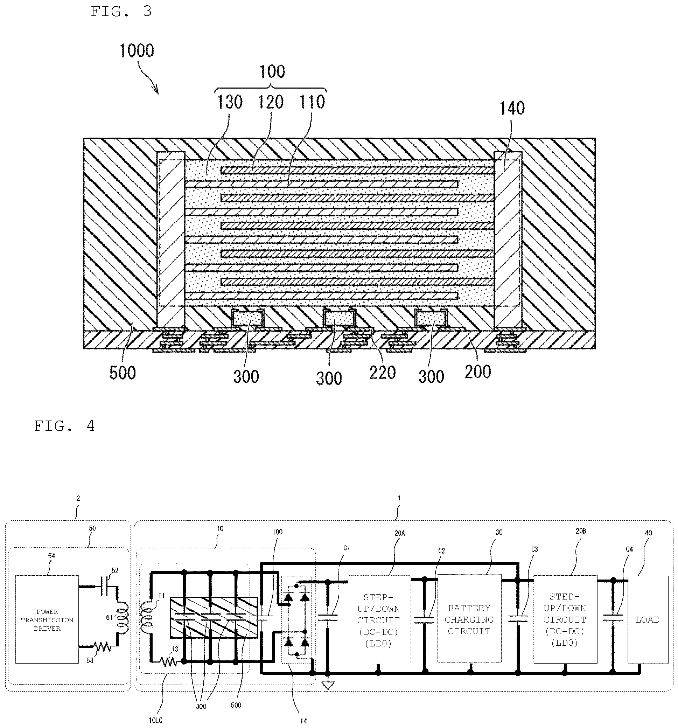

In one embodiment, a plurality of capacitors may be provided in parallel on the substrate. As shown in FIG. 3, FIG. 3 is different from FIG. 1 in that a plurality of the capacitors 300 are provided on a substrate. Each of the capacitors 300 is provided on the substrate 200 with the wiring 220 interposed therebetween, and is disposed on the substrate 200 at a predetermined interval. In other words, a plurality of the capacitors 300 are disposed side by side on the substrate 200 at a certain distance. Providing a plurality of the capacitors 300 in parallel on the substrate 200 causes the solid-state battery 100 to be heated at a plurality of places, and the temperature of the solid-state battery 100 can be more easily raised.

When a plurality of the capacitors are provided on the substrate, the plurality of the capacitors are preferably connected in parallel to each other as illustrated in the circuit diagram of FIG. 4. Parallelizing the connection of a plurality of the capacitors 300 divides the current flowing into the capacitor 300, and thermal deterioration of the capacitor 300 can be easily suppressed. In addition, parallelizing the capacitor 300 allows the parallel combined capacitance to be strictly set, and the resonance frequency $f_0$ can be easily strictly set.

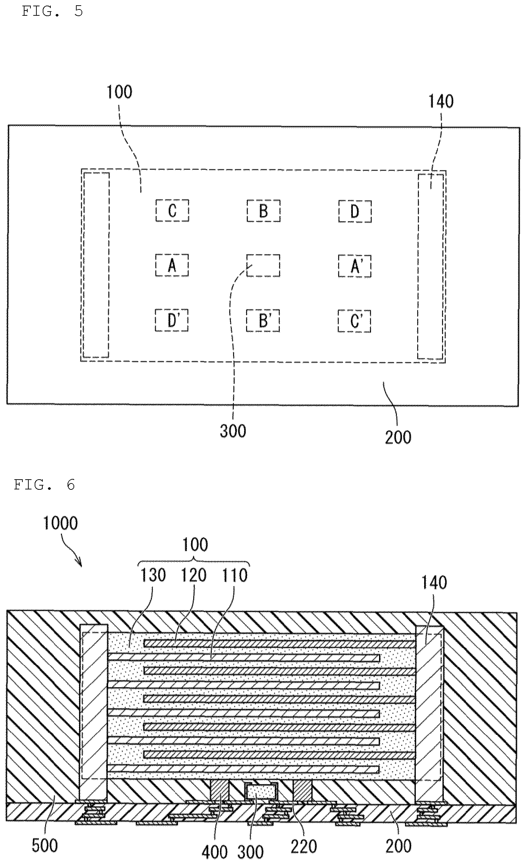

In one embodiment, from the viewpoint of suitable heat conduction of heat generated from the capacitor to the solid-state battery, the capacitor is preferably disposed so as to overlap with the central region of the solid-state battery. FIG. 5 is a schematic diagram of the solid-state battery module 1000 in FIG. 1 as viewed from direction A. In FIG. 5, the capacitor 300 is disposed in a central region of the solid-state battery 100. The "central region of the solid-state battery" means the central region of the main surface of the solid-state battery 100 facing the substrate 200. Disposing the capacitor 300 so as to overlap the central region of the solid-state battery 100 causes the heat generated from the capacitor 300 to be easily uniformly transferred from the central region of the solid-state battery 100 to the peripheral region thereof. That is, the temperature rise of the solid-state battery is suppressed from being biased to a specific portion of the solid-state battery, and as a result, the temperature of the entire solid-state battery can be raised more quickly.

When a plurality of the capacitors are provided, the capacitors may be disposed such that heat generated from the capacitors is uniformly transmitted to the solid-state battery. In other words, the capacitor may be provided so as to sandwich the central region of the solid-state battery. For example, as illustrated in FIG. 5, the capacitor 300 may be disposed at the locations A and A' sandwiching the central region. From a similar point of view, the capacitor 300 may be disposed at a location of B and B', C and C', D and D', or a combination thereof.

Providing a plurality of the capacitors in this way causes the heat generated from the capacitors 300 to be easily and uniformly transmitted to the solid-state battery 100. As a result, the entire solid-state battery can be heated more quickly.

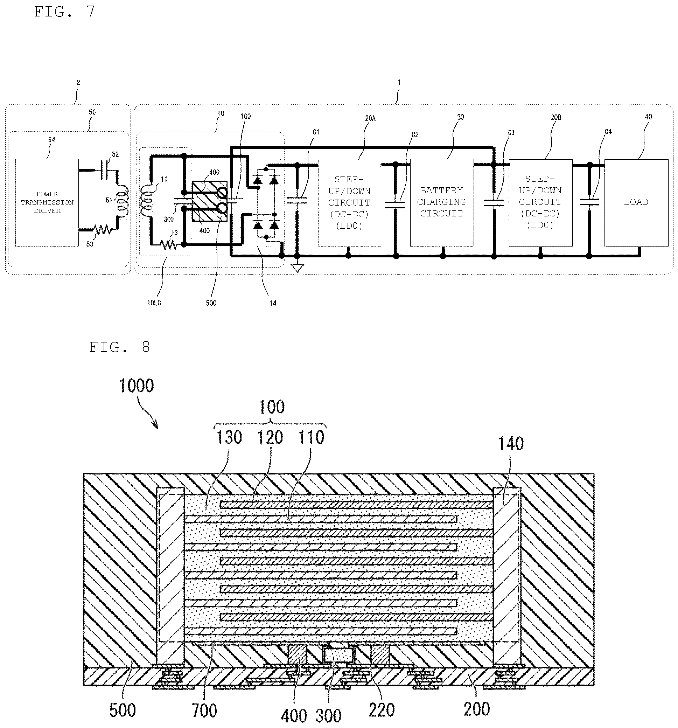

In one embodiment, a conductor portion may be further included, and the conductor portion may be disposed to be thermally conductive with the capacitor. As illustrated in FIG. 6, the present embodiment is different from FIG. 1 in that a conductor portion 400 is provided on the substrate 200. As illustrated in the circuit diagram of FIG. 7, the power receiving circuit 10 is provided with a conductor portion 400. The "disposed to be thermally conductive" described in the present description means that the capacitor 300 is disposed such that at least a part of heat of the conductor portion 400 can move to the conductor portion. Adopting such an aspect causes heat generated from the capacitor 300 to be easily efficiently transferred to the solid-state battery 100 with the conductor portion 400 interposed therebetween.

The "disposed to be thermally conductive" includes a state in which the conductor portion and the capacitor are in direct contact with each other, whereby heat of the capacitor is conducted to the conductor portion. Even if the conductor portion and the capacitor are not in contact with each other, heat of the capacitor is transferred to the conductor portion by thermal radiation.

A conductor portion 400 that receives heat from the capacitor 300 can conduct the heat to the solid-state battery 100. In this regard, the conductor portion 400 and the solid-state battery 100 are preferably close to each other. In one aspect, the conductor portion 400 and solid-state battery 100 may be in contact with each other.

The conductor portion 400 and the capacitor 300 are preferably connected to the same wiring. In addition, the conductor portion 400 and the capacitor 300 are preferably connected to the same mounting pad. Adopting such an aspect causes the heat of the capacitor 300 to be more easily conducted to the conductor portion 400 with the wiring 220 or the mounting pad interposed therebetween, and the temperature of the solid-state battery 100 is more suitably easily raised.

The conductor portion may be a metal conductor portion. Specifically, the metal conductor portion may be formed of at least one type of a material selected from the group consisting of Cu, Ag, Au, Al, Ni, W, and Mo. When the capacitor is mounted on the substrate, Cu may be used for the conductor portion. As an example of the conductor portion, a metal pin, for example, a Cu pin can be used. The conductor portion may be a ceramic conductor portion. Specifically, SiC or AlN may be used for the ceramic conductor portion. The conductor portion can also be referred to as a thermally conductive post.

The conductor portion may be plated. For example, the surface of the conductor portion may be plated with at least one type of a material selected from the group consisting of Au, Ni, and Sn. Plating the conductor portion causes the conductor portion to be easily soldered to the substrate. The conductor portion may be mounted on the substrate using a conductive member or the like described later.

The thermal conductivity of the conductor portion may be 100 W/m · K or more from the viewpoint of efficiently transferring the heat of the capacitor to the solid-state battery.

In one embodiment, as shown in FIG. 6, the conductor portion is preferably disposed between the substrate and the solid-state battery. That is, the conductor portion 400 is preferably disposed below the solid-state battery 100, specifically, the solid-state battery 100. Viewed from another aspect, the conductor portion 400 can be disposed in a region where the solid-state battery 100 and the substrate 200 overlap each other. The conductor portion 400 can be disposed on the first main surface 210 of the substrate 200. Adopting such an aspect causes the conductor portion 400 and the solid-state battery 100 to be closer to each other, and the heat generated from the capacitor 300 is easily efficiently transferred to the solid-state battery 100 with the conductor portion 400 interposed therebetween.

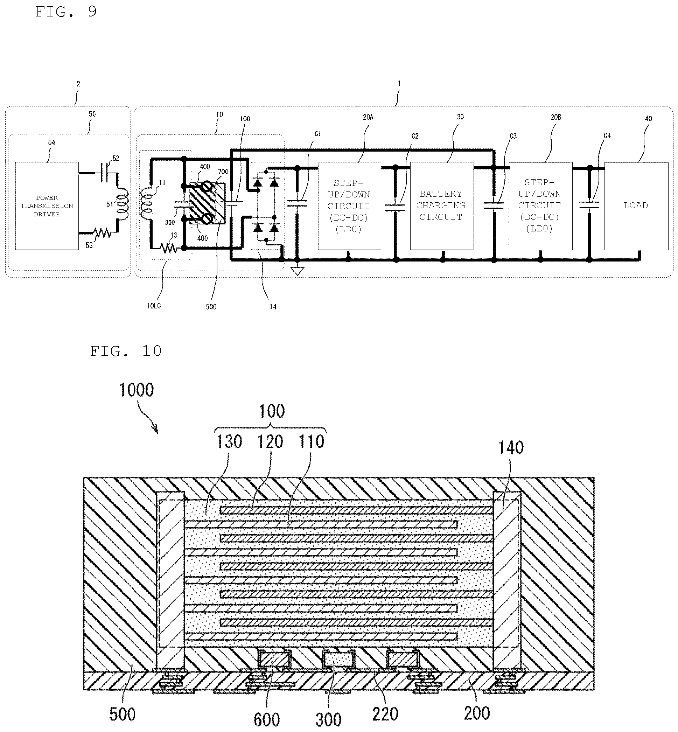

In one embodiment, as shown in FIG. 8, the conductor portion 400 and the solid-state battery 100 can be preferably connected each other with the conductor member 700 interposed therebetween. In the circuit diagram shown in FIG. 9, the conductive member 700 is provided between the conductor portion 400 and the solid-state battery 100. A conductive member 700 may have conductive and adhesive properties. Due to such a property, one side of the conductive member 700 can be in contact with the conductor portion 400, and the other side can be in contact with the solid-state battery 100. That is, the conductive member 700 can be in contact with the conductor portion 400 and the solid-state battery 100. This makes it possible to improve physical connection strength between solid-state battery 100 and conductor portion 400 while ensuring electrical connection between the solid-state battery 100 and conductor portion 400. From the viewpoint of preventing a short circuit, the conductive member is preferably separated from the end surface electrode. Alternatively, from the same viewpoint, an insulating thermally conductive sheet may be provided between the conductive member and the end surface electrode.

The conductive member may be a thermally conductive adhesive or a thermally conductive sheet. As the thermally conductive adhesive, for example, an Ag paste, a Cu paste, a Ni paste, a carbon paste, or the like may be used. The thermally conductive sheet may be a silicone-based, acrylic, or carbon fiber-based thermally conductive sheet.

The thermal conductivity of the conductive member may be 1 W/m · K or more from the viewpoint of efficiently transferring the heat of the capacitor to the solid-state battery.

In one embodiment, as shown in FIG. 8, the width dimension of the conductive member 700 may be larger than the width dimension of the facing surface of the conductor portion 400 facing the solid-state battery 100. The "width dimension of the conductive member 700" is the length of the conductive member 700 in the extending direction of the main surface of the substrate 200. The "width dimension of the facing surface of the conductor portion 400 facing the solid-state battery 100" also means the same length as described above. According to such a configuration, the conductive member 700 comes into contact with the conductor portion 400, and spreads and comes into contact with the solid-state battery 100 in a planar shape. That is, in addition to the electrical connection and the physical connection strength between the solid-state battery 100 and the conductor portion 400, the contact area between the conductive member 700 and the solid-state battery 100 becomes larger. For example, the heat of the capacitor 300 is easily transferred from the conductor portion 400 to spread over the entire surface of the solid-state battery 100. Therefore, more suitable heat transfer to the solid-state battery 100 becomes possible.

As illustrated in FIG. 1, in the capacitor 300, in order to enable electrical control, the wiring 220 of the substrate 200 is continuous from the first main surface 210 side to the second main surface 230 side opposite to the first main surface 210 with the inside of the substrate 200 interposed therebetween. Therefore, the heat of the capacitor 300 disposed on the wiring 220 on the first main surface 210 of the substrate 200 may come out to the outside through not only the main surface side on which the capacitor 300 is provided but also the second main surface 230 side of the substrate 200. In view of this point, in one embodiment, a low thermal conductive portion 600 having a thermal conductivity relatively lower than the thermal conductivity of the capacitor 300 may be further included, and the low thermal conductive portion 600 may be disposed adjacent to the capacitor 300 (refer to FIG. 10).

According to such a configuration, the low thermal conductive portion has a thermal conductivity relatively lower than the thermal conductivity of the capacitor, and thus heat generated from the capacitor 300 is easily suppressed from moving with the wiring interposed therebetween. For example, movement of the substrate 200 from the first main surface 210 side to the second main surface 230 side is easily suppressed. This suppression makes it easier for the capacitor 300 to heat the solid-state battery more suitably.

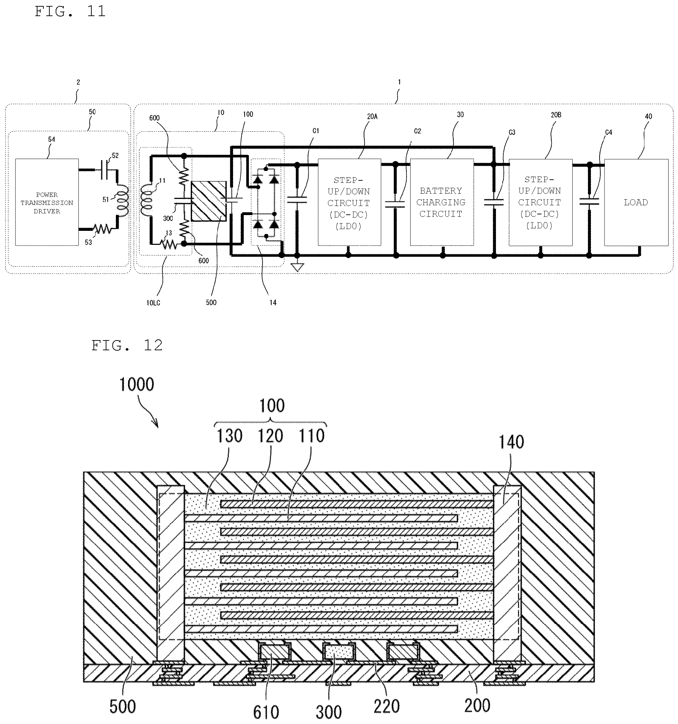

In a more preferred aspect, as shown in FIG. 10, the capacitor 300 may be sandwiched between at least two low thermal conductive portions 600. As illustrated in the circuit diagram of FIG. 11, the low thermal conductive portions 600 may be provided on both sides of the electrode of the capacitor 300. Specifically, at least two low thermal conductive portions 600 may be provided close to the capacitor 300. Disposing such low thermal conductive portion 600 causes a separation distance between the capacitor 300 and the low thermal conductive portion 600 to be shortened, allowing reducing a possibility that heat flows out to the outside from a main surface side on which the capacitor 300 is provided. This suppression makes it easier for the capacitor 300 to heat the solid-state battery more suitably.

The low thermal conductive portion preferably has low thermal conductivity and resistance. Specifically, the thermal conductivity of the low thermal conductive portion may be 100 W/m · K or less. The resistance of the low thermal conductive portion may be 0 Ω or more and 1 Ω or less. As the low thermal conductive portion, a jumper resistor and/or a chip fuse having an electrical short circuit characteristic may be used. As the material of the low thermal conductive portion, for example, a material containing an inorganic insulator such as alumina can be used. The resistance of the low thermal conductive portion is low, and thus the resistance of the entire circuit is hardly affected, and the current can efficiently flow through the capacitor.

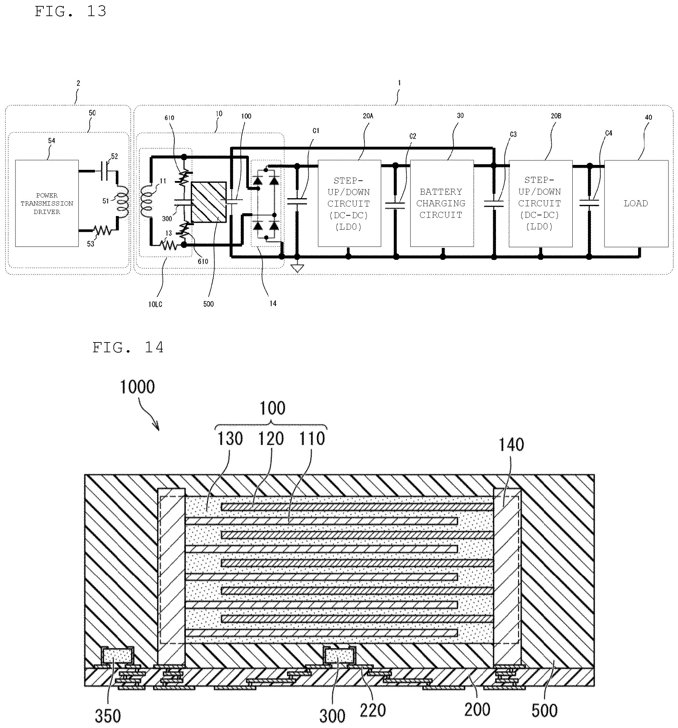

In one embodiment, when a current (trip current) equal to or larger than a predetermined current value flows, the resistance of the low thermal conductive portion increases, and the low thermal conductive portion may be insulated from a short state. Alternatively, when the temperature of the low thermal conductive portion becomes equal to or larger than a predetermined temperature, the resistance increases, and the low heat conductive portion may be insulated from a short state. For example, as such a low thermal conductive portion, a resettable fuse 610 may be used (refer to FIG. 12). As illustrated in the circuit diagram of FIG. 13, the low thermal conductive portions may be provided on both sides of the electrode of the capacitor 300.

Using the low thermal conductive portion that is insulated with a current (trip current) equal to or larger than a predetermined current value makes it easy to control the current flowing through the capacitor or the heat stored in the capacitor. That is, the thermal load of the capacitor is easily controlled. Therefore, for example, in a complicated switch circuit, it is easy to control the current flowing into the capacitor. When the insulated low thermal conductive portion does not satisfy the predetermined condition (for example, trip current or less), the resistance value of the insulated low thermal conductive portion decreases, and the low thermal conductive portion may be short-circuited again. The resettable fuse can also be referred to as a "polymer PTC element (PPTC element)", a "polyfuse", or the like.

In one embodiment, as shown in FIG. 14, two or more capacitors are provided, the two or more capacitors include a first capacitor 300 and a second capacitor 350, and the first capacitor 300 may be disposed between the substrate 200 and the solid-state battery 100, while the second capacitor 350 may be disposed in a portion not overlapping the solid-state battery 100.

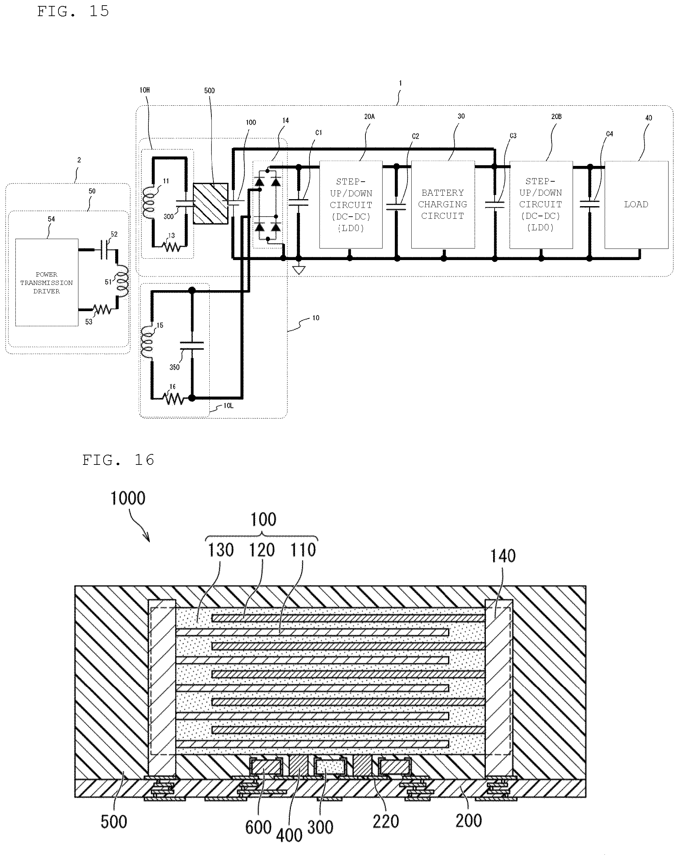

The circuit diagram shown in FIG. 15 is different from the circuit diagram of FIG. 2 in that a heating circuit 10H for heating the solid-state battery and a charging circuit 10L for charging the solid-state battery are provided. The heating circuit 10H includes a first power receiving coil 11, a first capacitor 300, and a first resistor 13. A charging circuit 10L includes a second power receiving coil 15, a second capacitor 350, and a second resistor 16. In both the heating circuit 10H and the charging circuit 10L, electric power is transmitted by an alternating magnetic field from a power transmitting unit, and a current flows.

When a current flows through the first capacitor 300 of the heating circuit 10H, Joule heat is generated by a resistance component (internal resistance) of the first capacitor 300, and the capacitor 300 can generate heat. The first capacitor 300 is disposed between the substrate 200 and the solid-state battery 100, and thus heat generated in the first capacitor 300 is transferred to the solid-state battery 100, and the temperature of the solid-state battery 100 can be raised. The heating circuit 10H is not electrically connected to the solid-state battery 100, and thus the heating circuit 10H does not charge the solid-state battery 100. That is, it can be said that the first capacitor 300 is a heating capacitor for raising the temperature of the solid-state battery 100.

On the other hand, the charging circuit 10L is electrically connected to the solid-state battery 100. Therefore, the power transmitted from the power transmitting unit 2 to the charging circuit 10L is sent to the solid-state battery 100, and the solid-state battery 100 is charged. As shown in FIG. 14, the second capacitor 350 of the charging circuit 10L is disposed at a portion not overlapping the solid-state battery 100. When the second capacitor 350 is disposed as described above, heat generated from the second capacitor 350 is less likely to be relatively transferred to the solid-state battery 100. It can be said that the second capacitor 350 is a charging capacitor in that the second capacitor 350 hardly contributes to the temperature rise of the solid-state battery 100.

As described above, dividing the function into the circuit for raising the temperature of the solid-state battery and the circuit for charging the solid-state battery, both the raising of the temperature of the solid-state battery and the charging of the solid-state battery can be stably performed.

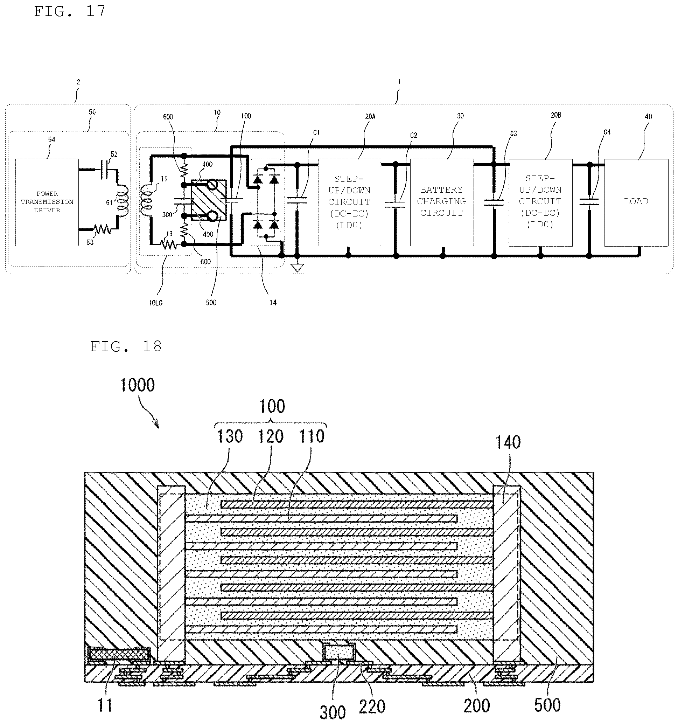

In one embodiment, as shown in FIG. 16, the solid-state battery module 1000 further includes a conductor portion 400 disposed to be thermally conductive with a capacitor 300, and a low thermal conductive portion 600 having a thermal conductivity relatively lower than the thermal conductivity of the capacitor 300. The circuit diagram shown in FIG. 17 further includes the capacitor 300, the conductor portion 400, and the low thermal conductive portion 600. The capacitor 300, the conductor portion 400, and the low thermal conductive portion 600 may be disposed in this order from the inside to the outside along the extending direction of the main surface of the substrate 200. When viewed from another aspect, the conductor portion 400 may be provided so as to sandwich the capacitor 300, and the low thermal conductive portion 600 may be provided so as to sandwich the capacitor 300 and the conductor portion 400.

Adopting such an aspect causes the heat generated from the capacitor 300 to be easily efficiently transferred to the solid-state battery 100 by the conductor portion 400, and the heat generated from the capacitor 300 can be easily suppressed from transferring with the wiring interposed therebetween by the low thermal conductive portion. Further, heat of the capacitor 300 conducted to the conductor portion 400 is easily suppressed from transferring with the wiring 220 interposed therebetween. That is, the heat generated from the capacitor 300 is more suitably easily transferred to the solid-state battery 100.

The present invention can be embodied in various aspects. This will be described below.

(Aspect in which power receiving coil is covered with covering portion)

In one embodiment, the power receiving coil may be covered with a covering portion. That is, the power receiving coil may be packaged by being covered with the covering portion together with the solid-state battery. As illustrated in FIG. 18, a power receiving coil 11 is disposed on the same main surface side as the main surface side of the substrate 200 on which the solid-state battery 100 is provided. In other words, the power receiving coil 11 is positioned on the same main surface side as the main surface side of the substrate 200 on which the capacitor 300 is provided. The power receiving coil 11 on the substrate 200 is largely wrapped by the covering portion 500 as a whole. In other words, the power receiving coil 11 provided on the substrate 200 may be covered with the covering portion 500 so as to be surrounded as a whole.

The power receiving coil is covered with the covering portion, and thus the size of the solid-state battery module can be easily reduced. In addition, the power receiving coil is easily protected from an external impact or the like, and damage to the power receiving coil is easily suppressed.

(Aspect in which power receiving coil is exposed to outside)

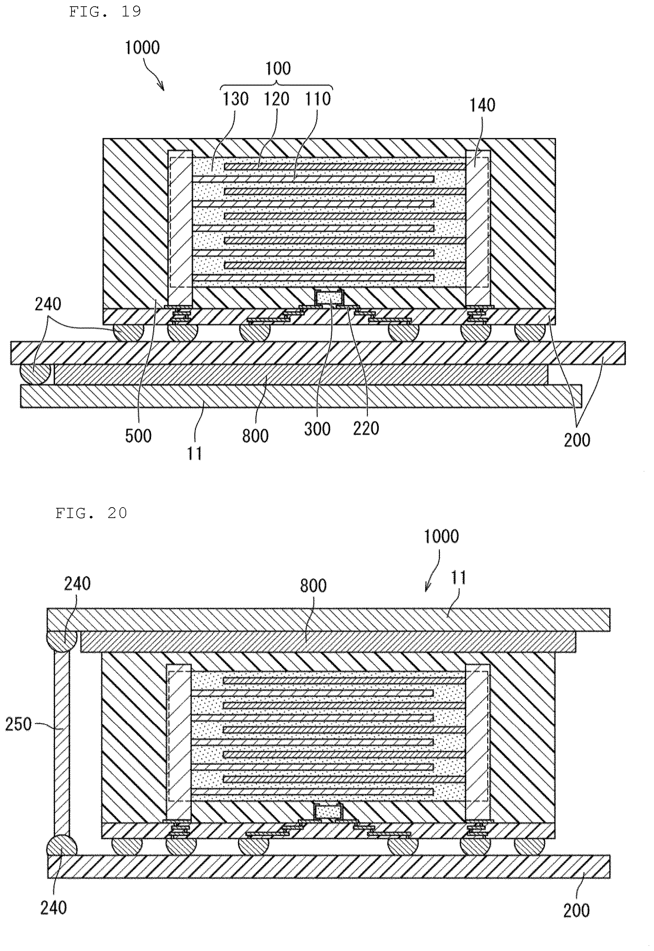

In one embodiment, the power receiving coil may be exposed to the outside. In other words, the power receiving coil may be disposed outside the outer surface of the covering portion. For example, as illustrated in FIG. 19, the power receiving coil 11 may be disposed on the main surface side opposite to the main surface side of the substrate on which the capacitor and the solid-state battery are disposed. Alternatively, as shown in FIG. 20, the power receiving coil 11 may be provided on a top surface side of the solid-state battery 100. In other words, the power receiving coil 11 may be provided such that the power receiving coil 11 and the substrate 200 sandwich the solid-state battery 100. In FIG. 20, the substrate 200 and the power receiving coil 11 provided so as to sandwich the solid-state battery 100 are electrically connected with a connection wiring 240 and a substrate-power receiving coil connection wiring 250 interposed therebetween. The substrate-power receiving coil connection wiring 250 may be a metal rod or a metal plate containing Cu, Ni, Al, Au, Ag, Pt, Zn, Ti, Mo, Nb, W, or an alloy thereof. The power receiving coil 11 is exposed to the outside, whereby the power receiving coil 11 can more easily receive the electromagnetic wave from the outside, and the power reception current sent to the capacitor 300 can be further increased. As a result, the capacitor 300 is likely to generate heat efficiently, and the temperature of the solid-state battery 100 is more likely to rise.

As in the aspects shown in FIGS. 19 and 20, a magnetic sheet 800 can be provided from the viewpoint of suppressing overcurrent to the metal included in the members constituting a solid-state battery module 1000. For example, the magnetic sheet 800 and the power receiving coil 11 may be integrated, and the magnetic sheet 800 side of the integrated body may be disposed to face the solid-state battery 100. In FIGS. 19 and 20, while the magnetic sheet 800 and the power receiving coil 11 are provided, the magnetic sheet 800 is disposed on the more proximal side with respect to the solid-state battery 100, and the power receiving coil 11 is disposed on the more distal side with respect to the solid-state battery 100. As another aspect, the covering portion 500 may be further covered with the magnetic sheet 800. The integrated body including the power receiving coil 11 and the magnetic sheet 800 is electrically connected to the solid-state battery by the connection wiring 240, and thus the induced current generated by the power receiving coil 11 can flow to the capacitor 300 and charges the solid-state battery. The capacitor 300 through which the current has flowed can generate heat, and thus the temperature of the solid-state battery 100 can be raised.

(Aspect in which wireless power supply circuit is covered with covering portion)

In one embodiment, the wireless power supply circuit may be covered with a covering portion. That is, the power receiving unit including the capacitor may be packaged by being covered with the covering portion together with the solid-state battery. In such an aspect, the power receiving circuit 10, the step-up/down circuits 20A and 20B, the battery charging circuit 30, and the load 40 can be covered with the covering portion. For example, the wireless power supply circuit may be provided on the same main surface side as the main surface side of the substrate 200 on which the solid-state battery 100 is provided. The wireless power supply circuit is covered with the covering portion, and thus the size of the solid-state battery module can be easily reduced. In addition, the wireless power supply circuit is easily protected from an external impact or the like, and damage to the wireless power supply circuit is easily suppressed.

[Method for producing solid-state battery module]

The solid-state battery module according to the present disclosure can be obtained through a process of preparing a solid-state battery that includes battery constituent units including a positive electrode layer, a negative electrode layer, and a solid electrolyte between the electrodes and then modularizing the solid-state battery.

The production of the solid-state battery according to the present invention can be roughly divided into: producing a solid-state battery itself corresponding to one before modularization (hereinafter, also referred to as an "pre-module battery"); preparing a substrate; and modularizing.

<<Method for producing pre-module battery>>

The pre-module battery can be produced by a printing method such as screen printing, a green sheet method using a green sheet, or a combined method thereof. More particularly, the pre-module battery itself may be fabricated in accordance with a conventional method for manufacturing a solid-state battery (thus, for raw materials such as the solid electrolyte, organic binder, solvent, optional additives, positive electrode active material, and negative electrode active material described below, those for use in the manufacture of known solid-state batteries may be used).

Hereinafter, for better understanding of the present invention, one manufacturing method will be exemplified and described, but the present invention is not limited to this method. In addition, the following time-dependent matters such as the order of descriptions are merely considered for convenience of explanation, and the present invention is not necessarily bound by the matters.

(Formation of stack block)

· The solid electrolyte, the organic binder, the solvent, and optional additives are mixed to prepare a slurry. Then, from the prepared slurry, sheets including the solid electrolyte are formed by firing.
· The positive electrode active material, the solid electrolyte, the conductive material, the organic binder, the solvent, and optional additives are mixed to prepare a positive electrode paste. Similarly, the negative electrode active material, the solid electrolyte, the conductive material, the organic binder, the solvent, and optional additives are mixed to prepare a negative electrode paste.
· The positive electrode paste is applied by printing onto the sheet, and a current collecting layer and/or a negative layer are applied by printing, if necessary. Similarly, the negative electrode paste is applied by printing onto the sheet, and a current collecting layer and/or a negative layer are applied by printing, if necessary.

· The sheet with the positive electrode paste applied by printing and the sheet with the negative electrode paste applied by printing are alternately stacked to obtain a stacked body. Further, the outermost layer (the uppermost layer and/or the lowermost layer) of the laminate may be an electrolyte layer, an insulating layer, or an electrode layer.

(Formation of battery fired body)

The stacked body is integrated by pressure bonding, and then cut into a predetermined size. The cut stacked body obtained is subjected to degreasing and firing. Thus, a fired stacked body is obtained. The stacked body may be subjected to degreasing and firing before cutting, and then cut.

(Formation of end surface electrode)

The end surface electrode on the positive electrode side can be formed by applying a conductive paste to the positive electrode-exposed side surface of the fired stacked body. Similarly, the end surface electrode on the negative electrode side can be formed by applying a conductive paste to the negative electrode-exposed side surface of the fired stacked body. The end surface electrodes on the positive electrode side and the negative electrode side may be provided so as to extend to the main surface of the fired stacked body. The ingredient for the end surface electrode can be selected from at least one selected from silver, gold, platinum, aluminum, copper, tin, and nickel. Incidentally, antimony, bismuth, indium, zinc, aluminum, and the like, which form an alloy with tin, may be contained.

Further, the end surface electrodes on the positive electrode side and the negative electrode side are not limited to being formed after firing the stacked body, and may be formed before the firing and subjected to simultaneous firing.

Through the above steps, a desired pre-module battery (corresponding to the solid-state battery 100) can be finally obtained.

<<Preparation of substrate>>

In this step, the substrate is prepared.

Although not particularly limited, in the case of using a resin substrate as the substrate, the substrate may be prepared by stacking multiple layers and then performing heating and pressurizing treatments for the layers. For example, a substrate precursor is formed using a resin sheet made by impregnating a fiber cloth as a substrate with a resin raw material. After the formation of the substrate precursor, the substrate precursor is subjected to heating and pressurization with a press machine. In contrast, when a ceramic substrate is used as the substrate, for the preparation thereof, for example, a plurality of green sheets can be subjected to thermal pressure bonding to form a green sheet laminate, and the green sheet laminate can be subjected to firing, thereby providing a ceramic substrate. The ceramic substrate can be prepared, for example, in accordance with the preparation of an LTCC substrate. The ceramic substrate may have vias and/or lands. In such a case, for example, holes may be formed in the green sheet by a punch press, a carbon dioxide laser, or the like, and the holes may be filled with a conductive paste material, or a precursor of a conductive portion such as a via or a land may be formed by a printing method or the like using a conductive paste material or solder. Further, lands and the like can also be formed after firing the green sheet laminate.

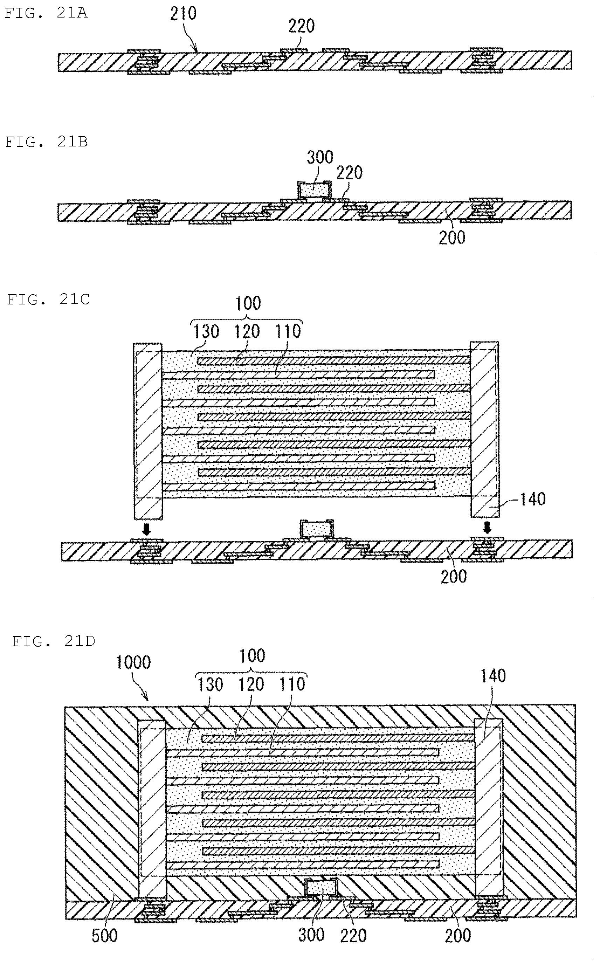

Thereafter, a plurality of wirings 220 are formed at predetermined intervals on the first main surface 210 of the substrate 200 for electrical connection (refer to FIG. 21A). As described above, a desired substrate 200 can be obtained.

<<Mounting of electronic component and the like>>

Then, at least an electronic component such as the capacitor 300 is mounted on the wiring 220 located at a predetermined position. In addition, although not illustrated, a conductor portion 400 and/or low thermal conductive portion 600 may be mounted on the wiring 220 provided on the substrate 200 (refer to FIG. 21B).

<<Modularization>>

Then, modularization is performed using the battery, the substrate, and the like obtained above (refer to FIG. 21C).

First, a pre-module battery 100 is disposed on the substrate 200 on which electronic components are mounted on a first main surface 210. That is, the "unmodularized solid-state battery" is disposed on the substrate (hereinafter, the battery used for modularization is also simply referred to as a "solid-state battery").

Specifically, the solid-state battery 100 is disposed on the substrate 200 such that the wiring 220 and the end surface electrode 140 of the solid-state battery are electrically connected to each other, and the capacitor 300 and the solid-state battery 100 are positioned on the same main surface side of the substrate. For example, the solid-state battery 100 may be disposed on the substrate 200 such that the solid-state battery 100 and the capacitor 300 face each other. Although not illustrated, when the conductor portion 400 is disposed on the substrate 200, a conductive member may be applied to the surface of the solid-state battery facing the conductor portion.

At this time, the covering portion 500 is formed. As the covering portion 500, it is preferable to include at least a covering insulating layer and further provide a covering inorganic layer (refer to FIG. 21D).

First, the covering insulating layer is formed to cover the solid-state battery 100 on the substrate 200. Hence, a raw material for the covering insulating layer is provided such that the solid-state battery on the substrate is totally covered. When the covering insulating layer is made of a resin material, a resin precursor is provided on the substrate and subjected to curing or the like to mold the covering insulating layer. According to a preferred embodiment, the covering insulating layer may be molded by pressurization with a mold. By way of example only, a covering insulating layer for sealing the solid-state battery on the substrate may be molded through compression molding. As long as a resin material generally used in molding, the form of the raw material for the covering insulating layer may be granular, and the type thereof may be thermoplastic. Such molding is not limited to die molding, and may be performed through polishing processing, laser processing, and/or chemical treatment.

Preferably, after the covering insulating layer is formed, the covering inorganic layer is formed. Specifically, the covering inorganic layer is formed on the "covering precursor in which each solid-state battery 100 is covered with the covering insulating layer on the substrate 200". For example, dry plating may be performed to form a dry plating film as the covering inorganic layer. More specifically, dry plating is performed to form the covering inorganic layer on the exposed surface other than the bottom surface of the covering precursor (that is, other than the bottom surface of the support substrate).

Through the above steps, a module product in which the solid-state battery on the substrate is covered with the covering portion can be obtained. More particularly, the "solid-state battery module" according to the present invention can be finally obtained.

Although the embodiment of the present invention has been described above, only typical examples have been illustrated. Therefore, the present invention is not limited to the embodiment, and those skilled in the art will readily understand that various aspects can be conceived.

An aspect of the solid-state battery module of the present disclosure is as follows.

<1> A solid-state battery module including: a substrate; a solid-state battery disposed on the substrate; and a wireless power supply circuit including a capacitor, wherein at least the capacitor and the solid-state battery are disposed on a same main surface side of the substrate.

<2> The solid-state battery module according to <1>, in which the capacitor is disposed on the substrate.

<3> The solid-state battery module according to <1> or <2>, in which the capacitor is located between the substrate and the solid-state battery.

<4> The solid-state battery module according to any one of <1> to <3>, in which the capacitor is a matching capacitor.

<5> The solid-state battery module according to any one of <1> to <4>, further including a covering portion that covers the solid-state battery and the capacitor.

<6> The solid-state battery module according to <5>, in which the capacitor is disposed inside an outer surface of the covering portion covering the solid-state battery.

<7> The solid-state battery module according to <2> to <6>, in which a plurality of the capacitors are provided in parallel on the substrate.

<8> The solid-state battery module according to any one of <1> to <7>, further including a conductor portion, in which the conductor portion is disposed so as to be thermally conductive with the capacitor.

<9> The solid-state battery module according to <8>, in which the conductor portion is disposed between the substrate and the solid-state battery.

<10> The solid-state battery module according to <8> or <9>, in which the conductor portion and the solid-state battery can be connected to each other with a conductive member interposed therebetween.

<11> The solid-state battery module according to <10>, in which a width dimension of the conductive member is larger than a width dimension of a facing surface of the conductor portion facing the solid-state battery.

<12> The solid-state battery module according to any one of <1> to <11>, further including a low thermal conductive portion having a thermal conductivity relatively lower than a thermal conductivity of the capacitor, in which the low thermal conductive portion is disposed adjacent to the capacitor.

<13> The solid-state battery module according to <12>, in which the capacitor is sandwiched between at least two of the low thermal conductive portions.

<14> The solid-state battery module according to <12> or <13>, in which the low thermal conductive portion is a jumper resistor.

<15> The solid-state battery module according to <12> or <13>, in which the low thermal conductive portion is a chip fuse.

<16> The solid-state battery module according to <12> or <13>, in which the low thermal conductive portion is a resettable fuse.

<17> The solid-state battery module according to <1>, further including: a conductor portion disposed to be thermally conductive with the capacitor; and a low thermal conductive portion having a thermal conductivity relatively lower than a thermal conductivity of the capacitor, in which the capacitor, the conductor portion, and the low thermal conductive portion are disposed in this order from the inside to the outside along an extending direction of a main surface of the substrate.

<18> The solid-state battery module according to any one of <1> to <17>, in which two or more of the capacitors are provided, the two or more capacitors include a first capacitor and a second capacitor, and the first capacitor is disposed between the substrate and the solid-state battery, while the second capacitor is disposed in a portion not overlapping the solid-state battery.

<19> The solid-state battery module according to any one of <3> to <18>, in which a minimum distance between the facing surface of the capacitor facing the solid-state battery and the solid-state battery is smaller than a minimum distance between the solid-state battery and the substrate.

<20> The solid-state battery module according to any one of <1> to <18>, in which the capacitor is disposed so as to overlap with a central region of the solid-state battery.

<21> The solid-state battery module according to any one of <5> to <20>, in which the wireless power supply circuit further includes a power receiving coil, and the power receiving coil and the capacitor are electrically connected to each other.

<22> The solid-state battery module according to <21>, in which the power receiving coil is covered with the covering portion.

## INDUSTRIAL APPLICABILITY

The solid-state battery module according to the present invention can be used in various fields where battery use or power storage can be assumed. By way of example only, the solid-state battery module according to the present invention can be used in the fields of electricity, information, and communication in which mobile devices and the like are used (such as the field of electric/electronic devices and the field of mobile devices including small electronic devices such as mobile phones, smartphones, notebook computers and digital cameras, activity trackers, arm computers, electronic paper, RFID tags, card-type electronic money, and smartwatches), home and small industrial applications (such as the fields of power tools, golf carts, and home, nursing, and industrial robots), large industrial applications (such as the fields of forklifts, elevators, and harbor cranes), the field of transportation systems (such as the fields of hybrid vehicles, electric vehicles, buses, trains, power-assisted bicycles, and electric two-wheeled vehicles), power system applications (such as the fields of various types of power generation, road conditioners, smart grids, and home energy storage systems), medical applications (field of medical equipment such as earphone hearing aids), pharmaceutical applications (fields such as dosage management systems), IoT fields, space and deep sea applications (such as the fields of space probes and submersibles), and the like.

## DESCRIPTION OF REFERENCE SYMBOLS

1: Power receiving unit
2: Power transmitting unit
10: Power receiving circuit
10H: Heating circuit
10L: Charging circuit
10LC: Resonance circuit
11: Power receiving coil, first power receiving coil
13: Resistor, first resistor
14: Rectifier circuit
15: Second power receiving coil
16: Second resistor
20A, 20B: Step-up/down circuit
30: Battery charging circuit
40: Load
50: Power transmission circuit
51: Power transmission coil
52: Capacitor
53: Resistor
54: Power transmission driver
100: Solid-state battery
110: Positive electrode layer
120: Negative electrode layer
130: Solid electrolyte
140: End surface electrode
140A: Positive-electrode-side end surface electrode
140B: Negative-electrode-side end surface electrode
200: Substrate
210: First main surface of substrate
220: Wiring
230: Second main surface of substrate opposite to first main surface
240: Connection wiring
250: Substrate-power receiving coil connection wiring
300: Capacitor, first capacitor
310: Facing surface 310 of capacitor facing solid-state battery
350: Second capacitor
400: Conductor portion
500: Covering portion
600: Low thermal conductive portion
610: Resettable fuse
700: Conductive member
800: Magnetic sheet
1000: All-solid-state battery module
C1 to C4: Smoothing capacitor
D1: Minimum distance between facing surface of capacitor and solid-state battery
D2: Minimum distance between solid-state battery and substrate

**Claims**

1. A solid-state battery module comprising:

   a substrate;
   a solid-state battery disposed on the substrate; and
   a wireless power supply circuit including a capacitor,
   wherein at least the capacitor and the solid-state battery are disposed on a same main surface side of the substrate.

2. The solid-state battery module according to claim 1, wherein the capacitor is disposed on the substrate.

3. The solid-state battery module according to claim 1 or 2, wherein the capacitor is located between the substrate and the solid-state battery.

4. The solid-state battery module according to any one of claims 1 to 3, wherein the capacitor is a matching capacitor.

5. The solid-state battery module according to any one of claims 1 to 4, further comprising a covering portion that covers the solid-state battery and the capacitor.

6. The solid-state battery module according to claim 5, wherein the capacitor is disposed inside an outer surface of the covering portion covering the solid-state battery.

7. The solid-state battery module according to claims 2 to 6, wherein a plurality of the capacitors are provided in parallel on the substrate.

8. The solid-state battery module according to any one of claims 1 to 7, further comprising a conductor portion, wherein the conductor portion is disposed so as to be thermally conductive with the capacitor.

9. The solid-state battery module according to claim 8, wherein the conductor portion is disposed between the substrate and the solid-state battery.

10. The solid-state battery module according to claim 8 or 9, wherein the conductor portion and the solid-state battery can be connected to each other with a conductive member interposed therebetween.

11. The solid-state battery module according to claim 10, wherein a width dimension of the conductive member is larger than a width dimension of a facing surface of the conductor portion facing the solid-state battery.

12. The solid-state battery module according to any one of claims 1 to 11, further comprising a low thermal conductive portion having a thermal conductivity relatively lower than a thermal conductivity of the capacitor, wherein the low thermal conductive portion is disposed adjacent to the capacitor.

13. The solid-state battery module according to claim 12, wherein the capacitor is sandwiched between at least two of the low thermal conductive portions.

14. The solid-state battery module according to claim 12 or 13, wherein the low thermal conductive portion is a jumper resistor.

15. The solid-state battery module according to claim 12 or 13, wherein the low thermal conductive portion is a chip fuse.

16. The solid-state battery module according to claim 12 or 13, wherein the low thermal conductive portion is a resettable fuse.

17. The solid-state battery module according to claim 1, further comprising:

    a conductor portion disposed to be thermally conductive with the capacitor; and
    a low thermal conductive portion having a thermal conductivity relatively lower than a thermal conductivity of the capacitor,
    wherein the capacitor, the conductor portion, and the low thermal conductive portion are disposed in this order from an inside to an outside along an extending direction of a main surface of the substrate.

18. The solid-state battery module according to any one of claims 3 to 17, wherein two or more of the capacitors are provided, the two or more capacitors include a first capacitor and a second capacitor, and the first capacitor is disposed between the substrate and the solid-state battery, while the second capacitor is disposed in a portion not overlapping the solid-state battery.

19. The solid-state battery module according to any one of claims 3 to 18, wherein a minimum distance between a facing surface of the capacitor facing the solid-state battery and the solid-state battery is smaller than a minimum distance between the solid-state battery and the substrate.

20. The solid-state battery module according to any one of claims 1 to 19, wherein the capacitor is disposed so as to overlap with a central region of the solid-state battery.

21. The solid-state battery module according to any one of claim 5 or 6, wherein the wireless power supply circuit further includes a power receiving coil, and the power receiving coil and the capacitor are electrically connected to each other.

22. The solid-state battery module according to claim 21, wherein the power receiving coil is covered with the covering portion.

FIG. 1

FIG. 2

FIG. 3

FIG. 4

FIG. 5

FIG. 6

FIG. 7

FIG. 8

FIG. 9

FIG. 10

FIG. 11

| POWER TRANSMISSION DRIVER | STEP-UP/DOWN CIRCUIT (DC-DC) (LD0) | BATTERY CHARGING CIRCUIT | STEP-UP/DOWN CIRCUIT (DC-DC) (LD0) | LOAD |

FIG. 12

FIG. 13

FIG. 14

FIG. 15

FIG. 16

FIG. 17

FIG. 18

FIG. 19

FIG. 20

FIG. 21A

FIG. 21B

FIG. 21C

FIG. 21D

## INTERNATIONAL SEARCH REPORT

| International application No. |
| --- |
| **PCT/JP2023/024665** |

### A. CLASSIFICATION OF SUBJECT MATTER

**H01M 10/6571**(2014.01)i; **H01M 10/44**(2006.01)i; **H01M 10/615**(2014.01)i; **H01M 10/647**(2014.01)i;
**H01M 10/653**(2014.01)i; **H01M 10/658**(2014.01)i; **H02J 7/00**(2006.01)i; **H02J 50/12**(2016.01)i
FI: H01M10/6571; H01M10/44 Q; H01M10/615; H01M10/647; H01M10/653; H01M10/658; H02J7/00 301D; H02J50/12

According to International Patent Classification (IPC) or to both national classification and IPC

### B. FIELDS SEARCHED

Minimum documentation searched (classification system followed by classification symbols)

H01M10/42-10/667; H02J50/00-50/90; H02J7/00-7/12; H02J7/34-7/36; H01M10/05-1/0587; H01M10/36-10/39;
H01M50/00-50/198; H01G2/02-2/06; H01G4/00-4/40; H01G13/00-13/06; H01C11/00-13/02; H05K7/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2021/070598 A1 (MURATA MANUFACTURING CO., LTD.) 15 April 2021 (2021-04-15) paragraphs [0013]-[0023], [0031], [0044], [0045], [0059]-[0084], fig. 1-8 | 1-7, 18-22 |
| Y | paragraphs [0013]-[0023], [0031], [0044], [0045], [0059]-[0084], fig. 1-8 | 8-11 |
| A | paragraphs [0013]-[0023], [0031], [0044], [0045], [0059]-[0084], fig. 1-8 | 12-17 |
| Y | JP 2020-136163 A (MITSUBA CORP) 31 August 2020 (2020-08-31) paragraphs [0008]-[0010], [0013], [0016]-[0027], [0031]-[0033], fig. 1-5 | 8-11 |
| A | WO 2020/203879 A1 (MURATA MANUFACTURING CO., LTD.) 08 October 2020 (2020-10-08) paragraphs [0036]-[0082], fig. 1-6B | 1-22 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 September 2023** | **12 September 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

| International application No. |
| --- |
| **PCT/JP2023/024665** |

| Patent document<br>cited in search report | Publication date<br>(day/month/year) | Patent family member(s) | Publication date<br>(day/month/year) |
| --- | --- | --- | --- |
| WO 2021/070598 A1 | 15 April 2021 | US 2022/0231347 A1<br>paragraphs [0036]-[0046], [0054], [0067], [0068], [0082]-[0107], fig. 1-8 | |
| JP 2020-136163 A | 31 August 2020 | (Family: none) | |
| WO 2020/203879 A1 | 08 October 2020 | US 2022/0013846 A1<br>paragraphs [0058]-[0110], fig. 1-6B<br>EP 3951975 A1<br>CN 113614968 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018160968 A